# EUROPÄISCHE PATENTSCHRIFT

(11) **EP 0 433 895 B1**
(45) Veröffentlichungstag und Bekanntmachung des Hinweises auf die Patenterteilung: **22.02.1995**
(21) Anmeldenummer: 90124117.4
(22) Anmeldetag: 13.12.1990
(51) Int. Cl.: G05B 19/18, B23Q 17/22

(54) **Verfahren zur Ermittlung der Anwesenheit oder der Abmessungen oder der korrekten Lage eines Werkstücks auf einer Werkzeugmaschine**
Method of detecting the presence or the dimensions or the correct position of a workpiece on a machine tool
Procédé pour détecter la présence ou les dimensions ou la position correcte d'une pièce à usiner sur une machine-outil

(30) Priorität: 18.12.1989 DE 3941756
(43) Veröffentlichungstag der Anmeldung: 26.06.1991
(73) Patentinhaber: GRUNDIG Aktiengesellschaft, 90762 Fürth (DE)
(72) Erfinder: Nolting, Klaus, W-3000 Hannover 1 (DE); Wolff, Paul, W-3000 Hannover 91 (DE); Wunderlich, Manfred, W-4811 Oerlinghausen (DE)
(74) Vertreter: Dreykorn-Lindner, Werner, Dipl.-Ing.

(56) Entgegenhaltungen:
- EP-A- 0 072 687
- EP-A- 0 199 705
- WO-A-88/02139
- DE-A- 3 151 579
- DE-A- 3 446 138
- US-A- 4 488 098

## Beschreibung

Die Erfindung betrifft ein Verfahren gemäß dem Oberbegriff des Anspruches 1, 2,3,9,10 bzw. 11.

Bisher übliche Verfahren, die das Meßsystem für die Vorschubbewegung von Maschinenschlitten zur Werkstückmessung nutzen, arbeiten mit einem Meßtaster zur Erzeugung eines Signals, bei dessen Auftreten die Position des Maschinenschlittens in Bezug zu einem maschinenfesten Referenzpunkt ermittelt wird. In der DE-A1-31 03 166 ist ein Werkstückmeßverfahren für eine numerisch gesteuerte Werkzeugmaschine vorgeschlagen, mit dem der Radius eines Werkstücks ausgemessen werden kann. Hierzu wird das Bearbeitungswerkzeug gegen die Mantelfläche des Werkstücks gefahren, wobei ein Band des zugehörigen Steuerungssystems codierte digitale Informationseinheiten speichert, die vorgegebene Positionen für die Schneidwerkzeugspitze darstellen. Diese Information wird durch einen Bandleser über einen Digitalrechner einem Register zugeführt. Ein Rückkopplungssignal ist mit einem Zähler verbunden, dessen Inhalt die augenblickliche Lage der Schneidspitze darstellt, wobei der Zähler zuvor über ein beim Auftreffen der Schneidspitze auf einen in der Achse des Werkstücks liegenden Bezugswertgeber erzeugtes Signal auf Null gesetzt wurde. Das Register und der Zähler sind mit einem Komparator verbunden, der einem die augenblickliche Differenz zwischen den Inhalten des Registers und des Zählers darstellenden Ausgang aufweist. Der Ausgang des Komparators bildet ein Signal, aus dem der Radius des Werkstücks ermittelt wird. Der Kontakt zwischen der Werzeugschneidspitze und dem Werkstück wird entweder durch einen elektrischen Drucksensor im Werkzeughalter oder einen elektrischen Stromkreis gewonnen, der durch die Berührung des Werkzeugs mit dem Werkstück geschlossen wird. Hierdurch ist ein großer Aufwand vorgegeben und derartige Einrichtungen sind störanfällig. Es ist beispielsweise vor jeder Messung eine Eichung des Werkzeugs erforderlich.

Gemäß DE-A1-34 46 138 ist für eine weitere NC-gesteuerte Werkzeugmaschine mit einem Reitstock eine in die Reitstockpinole integrierte Meßeinrichtung vorgeschlagen. Diese Meßeinrichtung braucht während der Bearbeitung zwar nicht aus dem Arbeitsraum entfernt zu werden,sie bietet jedoch nur eingeschränkte Möglichkeiten und stellt ebenfalls einen erheblichen Aufwand dar, da der Reitstock an sich keine eigene Meßeinrichtung benötigt. Mit dieser Meßeinrichtung kann die Anwesenheit und die Position eines Werkstücks in der Maschine festgestellt werden.

Schließlich ist eine Werkzeugmeßeinrichtung aus der DE-A1 37 42 573 bekannt, die keinerlei Einrichtungen zur Signalerzeugung benötigt und zum Werkzeugmessen das maschineneigene Vorschubmeßsystem benutzt. Das Signal wird durch Überwachung des Schleppfehlers des Vorschubantriebes gewonnen, während das Werkzeug gegen einen festen Anschlag gefahren wird. Da Werkzeugschneiden relativ empfindliche Elemente sind, müssen verschiedene Maßnahmen ergriffen werden, um Beschädigungen der Schneide am Anschlag zu vermeiden. Die Werkzeugkorrektur ergibt sich aus der Differenz zwischen Zielposition und erreichter Istposition.

Aus der deutschen Offenlegungsschrift DE-A1-31 51 579 ist ein Verfahren zum Positionieren von relativ zueinander verschiebbaren Maschinenteilen von numerisch gesteuerten Maschinen bekannt, bei dem Positionierfehler, beispielsweise das Überfahren unerwarteter Endpositionen oder Hindernisse durch verschiebbare Maschinenteile, verhindert werden, indem kontinuierlich die Positions-Istwerte des verschiebbaren Teils ermittelt werden. Dabei werden jeweils zwei aufeinanderfolgende Positions-Istwerte einer Differenzbildung unterzogen. Die erhaltene Differenz ist ein Maß, für die zurückgelegte Wegstrecke. Weiterhin werden die Spannungswerte, die an einen Antriebsregler für die Antriebseinheit des beweglichen Teiles anliegen, aufsumiert. Die aufsumierten Spannungswerte stellen ein Maß für den zu erwartenden zurückgelegten Weg dar. Die Werte für die tatsächlich zurückgelegte Wegstrecke und die zu erwartende zurückgelegte Wegstrecke werden miteinander verglichen und ein Fehlersignal erzeugt, wenn die Abweichung außerhalb eines wählbaren Toleranzbereiches liegt.

Der Erfindung liegt die Aufgabe zugrunde, ein Verfahren der eingangs angegebenen Arten so weiterzubilden, daß die Ermittlung der Anwesenheit oder der Abmessungen oder der korrekten Lage eines Werkstückes auf einer Werkzeugmaschine mit einem geringeren Aufwand möglich ist.

Diese Aufgabe wird durch die Merkmale jedes der Ansprüche 1 bis 3 und 9 bis 11 gelöst.

Allen erfindungsgemäßen Verfahren ist gemeinsam, daß die Signalgewinnung durch die Überwachung des Vorschubantriebs erfolgt, wobei die elektronische Steuereinrichtung des Vorschubantriebes oder dessen Steuerungs- bzw. Regelungsdaten ausgenutzt werden können, so daß es im Bereich des Werkstücks oder Anschlags keines besonderen Schalt- oder Meßmittels bedarf. Hierdurch läßt sich der Verfahrensaufwand wesentlich verringern, und es ist auch ein geringerer Vorrichtungsaufwand zur Durchführung des Verfahrens erforderlich, eben weil zusätzliche Schalt- und/oder Meßmittel entfallen. Zur Ermittlung des Signals können alle die Funktionen des Vorschubantriebes dienen, die bei Berührung des Anschlages mit dem Werkstück eine Änderung erfahren. Hiervon sind der sich verändernde Positions-Istwert bzw. die Differenz von zwei ermittelten Positions-Istwerten, die sich ändernde Geschwindigkeit, bzw. Drehzahl, das sich ändernde Drehmoment und die sich ändernde Beschleunigung bzw. Verzögerung betroffen und deshalb können diese Größen als Kriterium der Berührung zwischen Anschlag und dem Werkzeug und somit auch zur Signalgewinnung dienen.

Mit dem erfndungsgemäßen Verfahren läßt sich überprüfen, ob ein Werkstück in einer Spannposition, z.B. in einem Spannfutter vorhanden ist, ob das Werkstück eine ausreichende Plananlage am Spannfutter oder auf dem Spanntisch besitzt oder ob die Rohteilabmessungen die nachfolgende Bearbeitung erlauben. Da als mit dem Werkstück in Kontakt tretendes Teil ein Anschlag mit ebener Fläche oder eine ebene Fläche der verschiebbaren Teile selbst benutzt werden kann, ist mit Beschädigungen des Werkstückes nicht zu rechnen.

Bei Stangenbearbeitung ist es mit dem erfindungsgemäßen Verfahren möglich, zu prüfen, ob die Werkstoffstange für das zu fertigende Teil von der Stangenvorschubeinrichtung ausreichend weit vorgeschoben worden ist. Bei Guß-oder Schmiedeteilen mit stark schwankender Roteilkontur kann das Ausmaß mit ausreichender Genauigkeit für die nachfolgende Schnittaufteilung ermittelt werden.

Bei einer verschiebbaren, der Hauptspannvorrichtung gegenüberliegenden Gegenspannvorrichtung bzw. sogenannte Abgreif- oder Gegenspindel ermöglicht die Erfindung die Sicherstellung der Werkstückübergabe von einer Werkstückspindel zur anderen. Damit eine fehlerfreie Bearbeitung der zweiten Seite eines übergebenen Werkstücks erfolgen kann, müssen die Werkstücke in der empfangenden Werkstückspindel an einer Bezugsfläche anliegen. Wenn ein Werkstück beispielsweise der Hauptspindel durch eine am Werkzeugschlitten gelagerte Abgreifspindel zugeführt wird, mußte bisher ein federnder Auswerfer die Plananlage im Werkstückspannfutter der Hauptspindel gewährleisten. Dieser Auswerfer, der beim Beladen der Abgreifspindel hinderlich ist, kann nun entfallen, da durch das erfindungsgemäße Verfahren die ordnungsgemäße Anlage des Werkstücks geprüft wird. Das Gleiche gilt für die Übergabe eines Werkstücks von der Hauptspindel zur Gegen- oder Abgreifspindel.

Als verschiebliches Bauteil der Werkzeugmaschine kann auch ein Werkstückhandhabungsgerät angesehen werden, daß zum Werkstücktransport über eine numerisch gesteurte Vorschubachse verfügt, die an die Maschinensteuerung angeschlossen ist. Die ordnungsgemäße Lage des Werkstücks im Spannfutter ist dann über diese Vorschubachse ebenso feststellbar. Wenn ein Werkstück z.B bei nicht ausreichend geöffneter Spannzange nicht in diese eingeschoben werden kann und damit an einer falschen Fläche zur Anlage kommt, wird dies durch das Vorschubmeßsystem der Maschine oder des Handhabungssystems erkannt.

Die Anwesenheit eines Werkstücks kann auch festgestellt werden, wenn ein von einer Stange abzustechender Abschnitt durch eine Abholeinrichtung oder Gegenspindel abtransportiert wird. Der Vorschubantrieb erhält nach Beendigung des Abstechvorganges den Befehl, das bewegliche Bauteil von der Abholposition wegzubewegen. Ist der Abstech- oder Abtrennvorgang nicht erfolgreich ausgeführt worden und das abzuholende Werkstück noch mit dem Ausgangsmaterial verbunden, so kann eine Bewegung nicht erfolgen und die Überwachung des Positionsistwertes, der Vorschubgeschwindigkeit oder des Drehmomentes erzeugt ein Fehlersignal.

Vorteilhafte Weiterbildungen der Erfindung, die das erfindungsgemäße Verfahren weiter verbessern, sind in den Unteransprüchen beschrieben.

Die Erfindung wird anhand der folgenden Zeichnungen näher erläutert. Es zeigt:
- Fig. 1: eine Prinzipskizze einer erfindungsgemäßen Werkzeugmaschine mit einer Vorschubachse;
- Fig. 2: die Steuerung zur Überwachung des Vorschubantriebs;
- Fig. 3 und 4: die Werkzeugmaschine nach Fig. 1 in abgewandelten Ausgestaltungen.

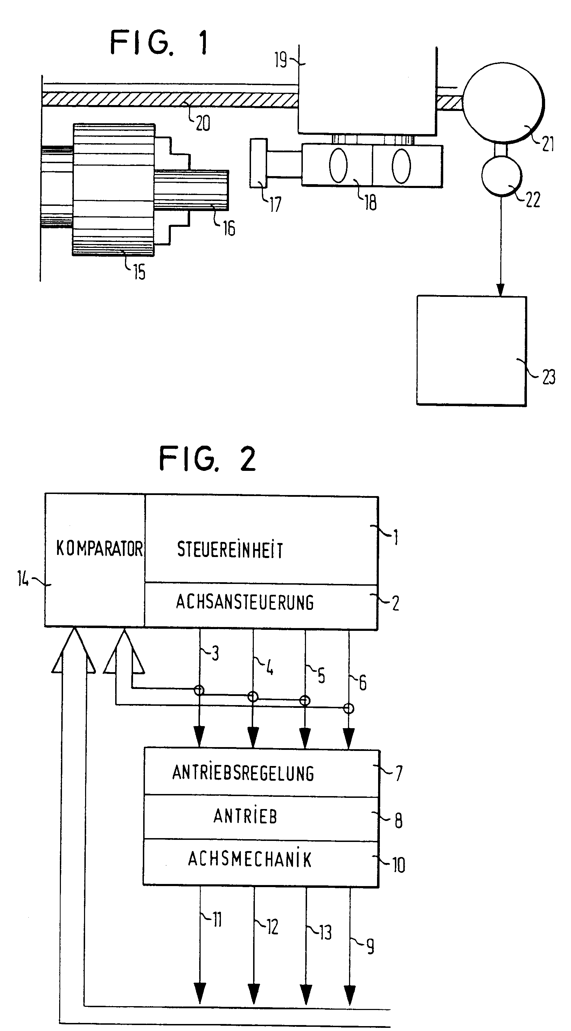

In Figur 1 ist eine Drehspindel mit einem Spannfutter 15 dargestellt, das ein Werkstück 16, z.B. eine Werkstückstange hält. Das Werkstück 16 kann von den Werkzeugen eines Revolverkopfes 18 bearbeitet werden, der auf einem Werkzeugschlitten 19 drehbar und in der jeweiligen Drehstellung feststellbar gelagert ist. In einer Schwenkposition des Revolverkopfes 18 ist ein Anschlag 17 dem Spannfutter 15 gegenüberliegend in diesen eingespannt. Der Schlitten 19 ist mittels einer Gewindespindel 20 in Werkstückspindelachsrichtung durch einen Vorschubmotor 21 verschiebbar am Maschinenkörper der Werkzeugmaschine gelagert. Mit dem Vorschubmotor 21 ist eine Meßeinrichtung 22 verbunden, die den Positions-Istwert des Schlittens 19 ermittelt und die Meßwerte zur weiteren Auswertung an eine Steuerung 23 überträgt.

Über eine elektronische Steuereinheit 1 wird dem Schlitten 19 in Achsrichtung der Werkstück- bzw. Gewindespindel 20 gemäß Figur 2 eine Sollposition 3 und eine Verfahrgeschwindigkeit 4 vorgegeben, mit der sich der Anschlag 17 auf das Werkstück 16 zubewegen soll. Ferner können Sollwerte 5,6 die Beschleunigung und das Drehmoment vorgegeben werden.

Der Steuereinheit 1 ist eine Regeleinrichtung mit einem Regelkreis zugeordnet, bei dem zyklisch der Unterschied zwischen der Sollpostion 3 und der jeweiligen Istposition des Vorschubs des Schlittens 19 bzw. des Anschlags 17 als Regelabweichung ermittelt wird. Dabei werden Regelsignale gebildet, die als Regelgröße auf eine Verminderung des Unterschieds hinwirken.

Die Sollposition 3 für den Anschlag 17 ist so gewählt, daß sie im Werkstück 16 bzw hinter der dem Anschlag zugewandten Fläche des Werkstückes 16 liegt, d.h., der Anschlag 17 kann bei Anwesenheit des Werkstücks 16 die Sollposition nicht erreichen.

In der Steuereinheit 1 wird durch die Funktion der Regeleinrichtung die Überwachung des Vorschubs aktiviert. Die Steuereinheit 1 vergleicht danach im Komparator 14 zyklisch den Positions-Istwert 11 des Anschlags 17 auf der Spindellängsachse mit den vorhergehenden Positions-Istwerten und bildet aus den jeweiligen Differenzwerten die Verschiebebewegung des Schlittens 19 bzw. Anschlags 17. Der Kontakt zwischen dem Werkstück 16 und dem Anschlag 17 wird im Komparator 14 dadurch erkannt, daß der Positions-Istwert 11 für einen bestimmten Zeitraum in einen vorgegebenen Positionsfenster bzw. -bereich bleibt bzw. die Positions-Istwert/Differenz einen vorgegebenen Wert unterschreitet. Außerdem wird die Sollposition 3 nicht erreicht, was der Regelkreis ebenfalls erkennt. Je nach Ausgestaltung der Steuereinheit 1 bzw.. der Regeleinrichtung ist es auch möglich, den Kontakt zwischen dem Anschlag 17 und dem Werkstück 16 durch die Überwachung der Vorschubgeschwindigkeit oder des Vorschubdrehmomentes und einen jeweiligen Vergleich der Istwerte oder deren Differenzen mit einem vorgebenen Grenzwert zu erkennen.

Ist der Kontakt erkannt, dann wird von der Steuereinheit 1 selbsttätig der aktuelle Istwert 11 als neue Sollposition 3 zur Verfügung gestellt, wodurch der Kontakt von wesentlichen Druckkräften freigestellt wird.

Ein noch evtl. anstehendes Moment bzw. eine Kraft auf den Anschlag 17 läßt sich je nach Ausgestaltung der Steuereinheit 1 wie folgt kompensieren: Falls nur Positions- und Geschwindigkeits-Sollwerte 3,4 ausgegeben bzw. durch die nachfolgende Antriebsregelung 7 verarbeitet werden, kann durch die Steuereinheit 1 eine Sollposition vorgegeben werden, die um einen einstellbaren Wert vor dem Kontaktpunkt liegt. Dadurch erfolgt eine gewisse Rückziehbewegung des Schlittens 19 durch die Gewindespindel 20, und der Drehmoment-Istwert wird reduziert bzw. rückverlegt. Es ist auch möglich, daß die Steuereinheit 1 durch einen Drehmomenten-Sollwert 6 direkt das Drehmoment des Antriebs und damit die Kraft am Anschlag 17 begrenzt bzw regelt.

Es ist im Rahmen der Erfindung je nach Ausgestaltung der Steuereinheit möglich, den Drehmomenten-Istwert 9 oder Drehzahl-Istwerte 12 bzw Beschleunigungs-Istwerte kontinuierlich wiederholt zu ermitteln, dem Komparator zuzuführen und auszuwerten. Aus jedem dieser Signale 9,11,12,13 läßt sich auf das Erreichen des Werkstückes 16 bzw. auf den Kontakt zwischen letzteren und dem Anschlag 17 schließen, da diese Größen sich beim Kontakt zwischen dem Anschlag 17 und dem Werkstück 16 signifikant verändern. So wird das Drehmoment und die Bremsbeschleunigung zum Zeitpunkt des Kontakts ansteigen und der Drehzahl-Istwert gegen Null gehen.

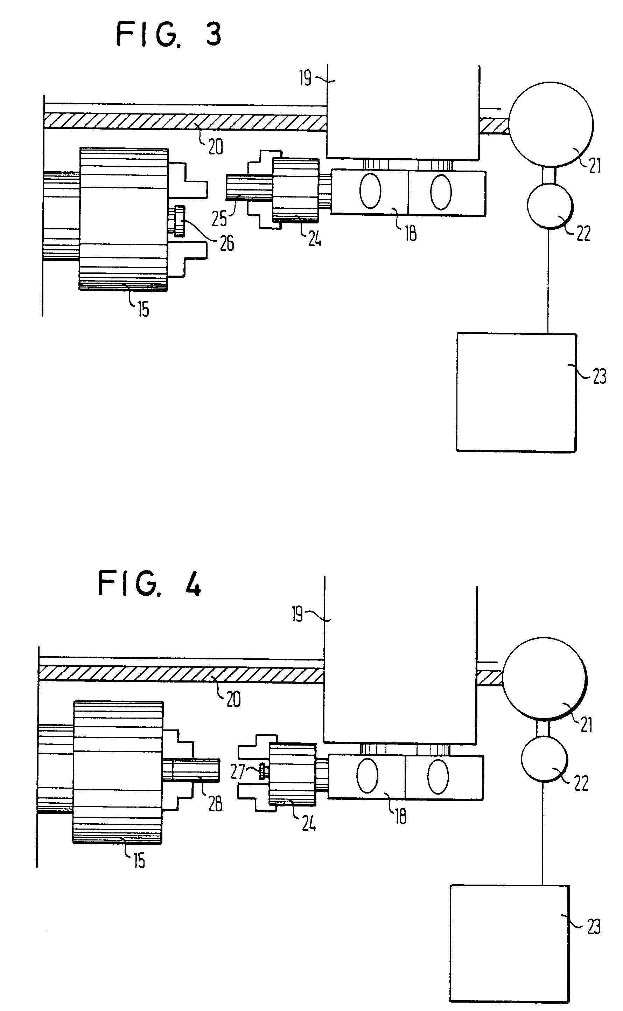

Die Ausgestaltung nach Figur 3, bei der gleiche oder vergleichbare Teile mit gleichen Bezugszeichen versehen sind, ist der Werkzeugmaschine der Hauptspannvorrichtung gegenüberliegend eine Gegenspannvorrichtung 24, z.B eine sog. Abgleich- oder Gegenspindel zugeordnet, die in vorteilhafterweise am Revolverkopf 18 angeordnet sein kann und somit mittels des Revolverkopfes 18 in ihre der Hauptspannvorrichtung gegenüberliegende Stellung schwenkbar. Wie schon beim vorbeschriebenen Ausführungsbeispiel ist auch bei dem Ausführungsbeispiel nach Figur 3 der Schlitten 19 nicht nur längs der Gewindespindel 20 verschiebbar, sondern auch rechtwinklig dazu (nicht dargestellt), um den Revolverkopf 18 bzw. die Gegenspannvorrichtung 24 in Fluchtstellung mit der Hauptspannvorrichtung 15 verschieben zu können. In der Gegenspannvorrichtung 24 ist ein Werkstück 25 eingespannt, das einer Bearbeitung unterzogen werden soll. Auch bei einer solchen Ausgestaltung können die Anwesenheit oder die Abmessungen oder die korrekte Lage des Werkstückes 25 ermittelt werden. Hierzu ist an der Hauptspannvorrichtung 15, vorzugsweise koaxial an deren der Gegenspannvorrichtung 24 zugewandten Seite, hier zwischen den Spannbacken der Hauptspannvorrichtung 15 ein Anschlag 26 vorgesehen, gegen den das Werkstück 25 mit seinem ihm zugewandten Ende zu drücken vermag, wenn der Schlitten 19 mit dem Antrieb 21 entsprechend verschoben wird. Bei dieser Ausgestaltung kann folglich das Werkstück 25 auch mit der Gegenspannvorrichtung 24 an die Hauptspannvorrichtung 15 übergeben werden und zwar in einer ganz besonderen Position.

Die Ausgestaltung nach Figur 4 ist der Hauptspannvorrichtung 15 gegenüberliegend eine vorzugsweise an einem Revolverkopf 18 angeordnete Gegenspannvorrichtung 24 angeordnet. Zusätzlich ist an der Gegenspannvorrichtung 24 an deren der Hauptspannvorrichtung 15 zugewandten Seite ein Anschlag 27 angeordnet, der sich vorzugsweise koaxial in der Gegenspannvorrichtung 24 und zwar hier zwischen deren Klemmbacken. Wie bereits beim ersten Ausführungsbeispiel gemäß Figuren 1 ist es auch bei dieser Ausgestaltung möglich, das Werkstück 28 in der Hauptspannvorrichtung 15 hinsichtlich seiner Anwesenheit oder Abmessungen oder korrekten Lage zu überprüfen. Bei dieser Überprüfung befindet sich das Werkstück 28 gespannt zwischen den Backen der Gegenspannvorrichtung 24, so daß der Anschlag 27 dagegenfahren kann, wonach das Werkstück 28 in dieser Position mit der Gegenspannvorrichtung 24 gespannt und nach Lösung der Hauptspannvorrichtung 15 auf die Gegenspannvorrichtung 24 übernommen werden kann. Folglich kann auch hier das Werkstück 28 in einer bestimmten Position an die Gegenspannvorrichtung 24 übergeben werden.

Es ist im Rahmen der Erfindung möglich, das erfindungsgemäße Verfahren auch bei solchen Werkzeugmaschinen anzuwenden, bei denen das Werkstück oder der zugehörige Anschlag nicht durch längs seiner Achse wirksame Verstellbewegungen sondern gegebenenfalls auch durch quer zu dieser Achse (Werkstückspindelachse) gerichtete Bewegungen verstellbar ist und somit hinsichtlich seiner Anwesenheit oder Abmessungen oder korrekten Lage überprüft werden kann.

Es ist im Rahmen der Erfindung auch möglich und vorteilhaft, an beiden Spannvorrichtungen, nämlich der Hauptspannvorrichtung 15 und der Gegenspannvorrichtung 24 jeweils einen Anschlag 17,26,27 vorzusehen. Gegebenenfalls bedarf es hierzu einer besonderen integrierten Steuereinrichtung oder der jeweilige Anschlag 26,27 bzw. das zugehörige Werkstück 25,28 sind durch eine gesonderte Regeleinrichtung geregelt fahrbar.

## Patentansprüche

1. Verfahren zur Ermittlung der Anwesenheit oder der Abmessungen oder der korrekten Lage eines Werkstückes (16,28), welches in der Hauptspannvorrichtung (15) einer numerisch gesteuerten Werkzeugmaschine eingespannt ist, gegenüber der ein Bauteil (19) verschieblich angeordnet ist, wobei für eine Verschiebung des Bauteiles (19) in Richtung auf das Werkstück (16,28) ein Positions-Sollwert (3) vorgegeben und der Positions-Istwert (11) des Bauteils (19) kontinuierlich wiederholt ermittelt wird,
**dadurch gekennzeichnet**,
daß der Positions-Sollwert (3) für das verschiebliche Bauteil (19) so gewählt wird, daß ein Anschlag (17,27) für das Werkstück (16,28), welcher Bestandteil des verschieblichen Bauteils (19) ist, bei nicht anwesendem Werkstück (16,28) an eine Stelle bewegt werden würde, die bei anwesendem Werkstück (16,28) innerhalb desselben liegt und daß ein Signal erzeugt wird, wenn die Differenz von zwei nacheinander ermittelten Positions-Istwerten (11) einen vorgegebenen Grenzwert unterschreitet und der Positions-Sollwert (3) nicht erreicht ist.

2. Verfahren zur Ermittlung der Anwesenheit oder der Abmessungen oder der korrekten Lage eines Werkstückes (16,28), welches in der Hauptspannvorrichtung (15) einer numerisch gesteuerten Werkzeugmaschine eingespannt ist, gegenüber der ein Bauteil (19) verschieblich angeordnet ist, wobei für eine Verschiebung des Bauteils (19) in Richtung auf das Werkstück (16,28) ein Positions-Sollwert (3) vorgegeben und der Positions-Istwert (11) des Bauteils (19) kontinuierlich wiederholt ermittelt wird,
**dadurch gekennzeichnet**,
daß der Positions-Sollwert (3) für das verschiebliche Bauteil (19) so gewählt wird, daß ein Anschlag (17,27) für das Werkstück (16,28), welcher Bestandteil des verschieblichen Bauteils (19) ist, bei nicht anwesendem Werkstück (16,28) an eine Stelle bewegt werden würde, die bei anwesendem Werkstück (16,28) innerhalb desselben liegt, daß kontinuierlich wiederholt der Geschwindigkeits-Istwert (12) des verschieblichen Bauteils (19) ermittelt wird, und daß ein Signal erzeugt wird, wenn die Differenz von zwei nacheinander ermittelten Geschwindigkeits-Istwerten (11a) größer als ein vorgegebener Grenzwert ist und der Positions-Sollwert (3) nicht erreicht ist, oder daß ein Signal erzeugt wird, wenn der zuletzt ermittelte Geschwindigkeits-Istwert (12) Kleiner als ein vorgegebener Grenzwert ist und der Positions-Sollwert (3) nicht erreicht ist.

3. Verfahren zur Ermittlung der Anwesenheit oder der Abmessungen oder der korrekten Lage eines Werkstückes (16,28), welches in der Hauptspannvorrichtung (15) einer numerisch gesteuerten Werkzeugmaschine eingespannt ist, gegenüber der ein Bauteil (19) verschieblich angeordnet ist, wobei für eine Verschiebung des Bauteils (19) in Richtung auf das Werkstück ein Positions-Sollwert (3) vorgegeben und der Positions-Istwert (11) des Bauteils (19) kontinuierlich wiederholt ermittelt wird,
**dadurch gekennzeichnet**,
daß der Positions-Sollwert (3) für das verschiebliche Bauteil (19) so gewählt ist, daß ein Anschlag (17,27) für das Werkstück (16,28) welcher Bestandteil des verschieblichen Bauteils (19) ist, bei nicht anwesendem Werkstück (16,28) an eine Stelle bewegt werden würde, die bei anwesendem Werkstück (16,28) innerhalb desselben liegt, daß kontinuierlich wiederholt der Drehmomenten-Istwert (9) für den Antrieb des verschieblichen Bauteils (19) ermittelt wird, und daß ein Signal erzeugt wird, wenn die Differenz von zwei nacheinander ermittelten Drehmomenten-Istwerten (9) größer als ein vorbestimmter Grenzwert ist und der Positions-Sollwert (3) nicht erreicht ist, oder daß ein Signal erzeugt wird, wenn der zuletzt ermittelte Drehmomenten-Istwert (9) größer als ein vorgegebener Grenzwert ist und der Positions-Sollwert (3) nicht erreicht ist.

4. Verfahren nach Anspruch 1 und/oder Anspruch 2 und/oder Anspruch 3,
**dadurch gekennzeichnet**,
daß der Anschlag (27) für das Werkstück (28) bei einer an dem verschieblichen Bauteil vorgesehenen Gegenspannvorrichtung (24) in letzterer angeordnet wird, derart, daß er bei geöffneter Gegenspannvorrichtung (24) gegen das zur Aufnahme bereitgehaltene Werkstück (28) gefahren werden kann.

5. Verfahren nach einem oder mehreren der vorhergehenden Ansprüche,
**dadurch gekennzeichnet**,
daß aus dem letzten vor Auftreten des Signals ermittelten Positions-Istwert (11) des verschieblichen Bauteils (19) und den bekannten Abmessungen des Anschlags (17,27) für das Werkstück (16,28) sowie des verschieblichen Bauteils (19) eine Abmessung des Werkstückes (16,28) errechnet wird und/oder die korrekte Lage und/oder die Anwesenheit eines Werkstückes (16,28) erkannt wird.

6. Verfahren nach einem oder mehreren der vorhergehenden Ansprüche,
**dadurch gekennzeichnet**,
daß bei Auftreten des Signals ein Positions-Sollwert (3) für das verschiebliche Bauteil (19) ausgegeben wird, der um einen vorgegebenen Betrag in Verfahrrichtung des verschieblichen Bauteils (19) vor dem bei Signalabgabe ermittelten Positions-Istwert (11) liegt.

7. Verfahren nach einem oder mehreren der vorhergehenden Ansprüche,
**dadurch gekennzeichnet**,
daß für den Antrieb des verschieblichen Bauteils (19) ein Drehmomenten-Sollwert (6) vorgegeben wird, und daß der Drehmomenten-Sollwert (6) bei Signalabgabe auf einen Grenzwert gesetzt wird.

8. Verfahren nach einem oder mehreren der vorhergehenden Ansprüche,
**dadurch gekennzeichnet**,
daß für den Antrieb des verschieblichen Bauteils (19) ein Drehmomenten-Sollwert (6) vorgegeben wird, und daß der Drehmomenten-Istwert (9) kontinuierlich wiederholt ermittelt und so geregelt wird, daß er den Drehmomenten-Sollwert (6) auch nach Berührung zwischen dem Werkstück (16,28) und dem Anschlag (17,27) nicht überschreitet.

9. Verfahren zur Ermittlung der Anwesenheit oder der Abmessungen oder der korrekten Lage eines Werkstücks (25) an einer eine Hauptspannvorrichtung (15) aufweisenden numerisch gesteuerten Werkzeugmaschine, gegenüber der ein Bauteil (19) verschieblich angeordnet ist, wobei für die Verschiebung des Bauteils (19) ein Positions-Sollwert (3) ausgegeben und der Positions-Istwert (11) des Bauteils (19) kontinuierlich wiederholt ermittelt wird,
**dadurch gekennzeichnet**,
daß - wenn sich an dem verschieblichen Bauteil (18,19) eine das Werkstück (25) haltende Gegenspannvorrichtung (24) befindet - an der Werkzeugmeßlinie ein maschinenfester Anschlag (26) für das Werkstück (25) vorgesehen wird, daß der Positions-Sollwert (3) für das verschiebliche Bauteil so gewählt wird, daß sich der maschinenfeste Anschlag (26) bei nicht in der Spannvorrichtung (24) anwesendem Werkstück (25) an einer Stelle befinden würde, die bei anwesendem Werkstück (25) innerhalb desselben liegt, und daß ein Signal erzeugt wird, wenn die Differenz von zwei nacheinander ermittelten Positions-Istwerten (11) einen vorgegebenen Grenzwert unterschreitet und der Positions-Sollwert (3) nicht erreicht ist.

10. Verfahren zur Ermittlung der Anwesenheit oder der Abmessungen oder der korrekten Lage eines Werkstücks (25) an einer eine Hauptspannvorrichtung (15) aufweisenden numerisch gesteuerten Werkzeugmaschine, gegenüber der ein Bauteil (18,19) verschieblich angeordnet ist, wobei für die Verschiebung des Bauteils (18,19) ein Positions-Sollwert (3) ausgegeben und der Positions-Istwert (12) des Bauteils (18,19) kontinuierlich wiederholt ermittelt wird,
**dadurch gekennzeichnet**,
daß bei einer an dem verschieblichen Bauteil (18,19) vorgesehenen und das Werkstück (25) haltenden Gegenspannvorrichtung (24) ein maschinenfester Anschlag (26) für das Werkstück (25) vorgesehen wird, daß der Positions-Sollwert (3) für das verschiebliche Bauteil (18,19) so gewählt wird, daß sich der maschinenfeste Anschlag (3) bei nicht in der Spannvorrichtung (24) anwesendem Werkstück (25) an einer Stelle befinden würde, die bei anwesendem Werkstück (25) innerhalb desselben liegt, daß kontinuierlich wiederholt der Geschwindigkeits-Istwert (12) des verschieblichen Bauteils (18,19) ermittelt wird, und daß ein Signal erzeugt wird, wenn die Differenz von zwei nacheinander ermittelten Geschwindigkeits-Istwerten (12) größer als ein vorgegebener Grenzwert ist und der Positions-Sollwert (3) nicht erreicht ist, oder daß ein Signal erzeugt wird, wenn der zuletzt ermittelte Geschwindigkeits-Istwert (12) kleiner als ein vorgegebener Grenzwert ist und der Positions-Sollwert (3) nicht erreicht ist.

11. Verfahren zur Ermittlung der Anwesenheit oder der Abmessungen oder der korrekten Lage eines Werkstücks (25) an einer eine Hauptspannvorrichtung (15) aufweisenden numerisch gesteuerten Werkzeugmaschine, gegenüber der ein Bauteil (18,19) verschieblich angeordnet ist, wobei für die Verschiebung des Bauteils (18,19) ein Positions-Sollwert (3) ausgegeben und der Positions-Istwert (12) des Bauteils (18,19) kontinuierlich wiederholt ermittelt wird,
**dadurch gekennzeichnet**,
daß bei einer an dem verschieblichen Bauteil (18,19) vorgesehenen und das Werkstück (25) haltenden Gegenspannvorrichtung (24) ein maschinenfester Anschlag (26) für das Werkstück (25) vorgesehen wird, daß der Positions-Sollwert (3) für das verschiebliche Bauteil (18,19) so gewählt wird, daß sich der maschinenfeste Anschlag (26) bei nicht in der Spannvorrichtung (24) anwesendem Werkzeug an einer Stelle befinden würde, die bei anwesendem Werkstück (25) innerhalb desselben liegt, daß kontinuierlich wiederholt der Drehmomenten-Istwert (9) für den Antrieb des verschieblichen Bauteils (18,19) ermittelt wird, und daß ein Signal erzeugt wird, wenn die Differenz von zwei nacheinander ermittelten Drehmomenten-Istwerten (9) größer als ein vorbestimmter Grenzwert ist und der Positions-Sollwert (3) nicht erreicht ist, oder daß ein Signal erzeugt wird, wenn der zuletzt ermittelte Drehmomenten-Istwert (9) größer als ein vorgegebener Grenzwert ist und der Positions-Sollwert (3) nicht erreicht ist.

12. Verfahren nach Anspruch 9 und/oder Anspruch 10 und/oder Anspruch 11,
**dadurch gekennzeichnet**,
daß der maschinenfeste Anschlag (26) in der Hauptspannvorrichtung (15) angeordnet wird, so, daß das Werkstück (25) bei geöffneter Hauptspannvorrichtung (15) dagegen gefahren werden kann.

13. Verfahren nach einem oder mehreren der Ansprüche 9 bis 12,
**dadurch gekennzeichnet**,
daß aus dem letzten vor Auftreten des Signals ermittelten Positions-Istwert (11) des verschieblichen Bauteils (18,19) und den bekannten Abmessungen des verschieblichen Bauteils (18,19) sowie dessen Spannvorrichtung (24) eine Abmessung des Werkstücks (25) errechnet wird und/oder die korrekte Lage und/oder die Anwesenheit eines Werkstücks (25) erkannt wird.

14. Verfahren nach einem oder mehreren der Ansprüche 9 bis 13,
**dadurch gekennzeichnet**,
daß bei Auftreten des Signals ein Positions-Sollwert (3) für das verschiebliche Bauteil (18,19) ausgegeben wird, der um einen vorgegebenen Betrag in Verfahrrichtung des verschieblichen Bauteils (18,19) vor dem bei Signalabgabe ermittelten Positions-Istwert (11) liegt.

15. Verfahren nach einem oder mehreren der Ansprüche 9 bis 14,
**dadurch gekennzeichnet**,
daß für den Antrieb des verschieblichen Bauteils (18,19) ein Drehmomenten-Sollwert (9) vorgegeben wird, und daß der Drehmomenten-Sollwert (9) bei Signalabgabe auf einen Grenzwert gesetzt wird.

16. Verfahren nach einem oder mehreren der Ansprüche 9 bis 15,
**dadurch gekennzeichnet**,
daß für den Antrieb des verschiebbaren Bauteils (18,19) ein Drehmomenten-Sollwert (6) vorgegeben wird, und daß der Drehmomenten-Istwert (9) kontinuierlich wiederholt ermittelt und so geregelt wird, daß er den Drehmomenten-Sollwert (6) auch nach Berührung zwischen dem Werkstück (25) und dem maschinenfesten Anschlag (26) nicht überschreitet.

## Claims

1. Method of determining the presence or the dimensions or the correct position of a workpiece (16, 28) which is clamped in the main clamping device (15) of a numerically controlled machine tool, relative to which a component (19) is displaceably arranged, a desired position value (3) being predetermined for a displacement of the component (19) in the direction of the workpiece (16, 28) and the actual position value (11) of the component (19) being determined in a continuously repeated manner, characterized in that the desired position value (3) for the displaceable component (19) is selected in such a way that a stop (17, 27) for the workpiece (16, 28), which stop (17, 27) is an integral part of the displaceable component (19), would be moved if the workpiece (16, 28) is not present to a location which lies inside the workpiece (16, 28) if the latter is present, and in that a signal is produced if the difference between two actual position values (11) determined one after the other falls below a predetermined limit value and the desired position value (3) is not reached.

2. Method of determining the presence or the dimensions or the correct position of a workpiece (16, 28) which is clamped in the main clamping device (15) of a numerically controlled machine tool, relative to which a component (19) is displaceably arranged, a desired position value (3) being predetermined for a displacement of the component (19) in the direction of the workpiece (16, 28) and the actual position value (11) of the component (19) being determined in a continuously repeated manner, characterized in that the desired position value (3) for the displaceable component (19) is selected in such a way that a stop (17, 27) for the workpiece (16, 28), which stop (17, 27) is an integral part of the displaceable component (19), would be moved if the workpiece (16, 28) is not present to a location which lies inside the workpiece (16, 28) if the latter is present, in that the actual speed value (12) of the displaceable component (19) is determined in a continuously repeated manner, and in that a signal is produced if the difference between two actual speed values (11a) determined one after the other is greater than a predetermined limit value and the desired position value (3) is not reached or in that a signal is produced if the actual speed value (12) determined last is smaller than a predetermined limit value and the desired position value (3) is not reached.

3. Method of determining the presence or the dimensions or the correct position of a workpiece (16, 28) which is clamped in the main clamping device (15) of a numerically controlled machine tool, relative to which a component (19) is displaceably arranged, a desired position value (3) being predetermined for a displacement of the component (19) in the direction of the workpiece and the actual position value (11) of the component (19) being determined in a continuously repeated manner, characterized in that the desired position value (3) for the displaceable component (19) is selected in such a way that a stop (17, 27) for the workpiece (16, 28), which stop (17, 27) is an integral part of the displaceable component (19), would be moved if the workpiece (16, 28) is not present to a location which lies inside the workpiece (16, 28) if the latter is present, in that the actual torque value (9) for the drive of the displaceable component (19) is determined in a continuously repeated manner, and in that a signal is produced if the difference between two actual torque values (9) determined one after the other is greater than a predetermined limit value and the desired position value (3) is not reached or in that a signal is produced if the actual torque value (9) determined last is greater than a predetermined limit value and the desired position value (3) is not reached.

4. Method according to Claim 1 and/or Claim 2 and/or Claim 3, characterized in that the stop (27) for the workpiece (28), when a counter-clamping device (24) is provided at the displaceable component, is arranged in the counter-clamping device (24) in such a way that it can be moved against the workpiece (28), held ready for mounting, when the counter-clamping device (24) is opened.

5. Method according to one or more of the preceding claims, characterized in that, from the last actual position value (11), determined before the occurrence of the signal, of the displaceable component (19) and from the known dimensions of the stop (17, 27) for the workpiece (16, 28) as well as of the displaceable component (19), a dimension of the workpiece (16, 28) is calculated and/or the correct position and/or the presence of a workpiece (16, 28) is recognized.

6. Method according to one or more of the preceding claims, characterized in that, when the signal occurs, a desired position value (3) for the displaceable component (19) is delivered which lies by a predetermined magnitude in the traverse direction of the displaceable component (19) in front of the actual position value (11) determined during signal output.

7. Method according to one or more of the preceding claims, characterized in that a desired torque value (6) is predetermined for the drive of the displaceable component (19), and in that the desired torque value (6) is set to a limit value during signal output.

8. Method according to one or more of the preceding claims, characterized in that a desired torque value (6) is predetermined for the drive of the displaceable component (19), and in that the actual torque value (9) is determined in a continuously repeated manner and regulated in such a way that it does not exceed the desired torque value (6) even after contact between the workpiece (16, 28) and the stop (17, 27).

9. Method of determining the presence or the dimensions or the correct position of a workpiece (25) on a numerically controlled machine tool having a main clamping device (15), relative to which a component (19) is displaceably arranged, a desired position value (3) being delivered for the displacement of the component (19) and the actual position value (11) of the component (19) being determined in a continuously repeated manner, characterized in that - if a counter-clamping device (24) holding the workpiece (25) is located on the displaceable component (18, 19) - a stop (26) fixed to the machine is provided for the workpiece (25) at the tool measuring line, in that the desired position value (3) for the displaceable component is selected in such a way that the stop (26) fixed to the machine, if the workpiece (25) is not present in the clamping device (24), would be at a location which lies inside the workpiece (25) if the latter is present, and in that a signal is produced if the difference between two actual position values (11) determined one after the other falls below a predetermined limit value and the desired position value (3) is not reached.

10. Method of determining the presence or the dimensions or the correct position of a workpiece (25) on a numerically controlled machine tool having a main clamping device (15), relative to which a component (18, 19) is displaceably arranged, a desired position value (3) being delivered for the displacement of the component (18, 19) and the actual position value (11) of the component (18, 19) being determined in a continuously repeated manner, characterized in that, in the case of a counter-clamping device (24) provided on the displaceable component (18, 19) and holding the workpiece (25), a stop (26) fixed to the machine is provided for the workpiece (25), in that the desired position value (3) for the displaceable component (18, 19) is selected in such a way that the stop (26) fixed to the machine, if the workpiece (25) is not present in the clamping device (24), would be at a location which lies inside the workpiece (25) if the latter is present, in that the actual speed value (12) of the displaceable component (18, 19) is determined in a continuously repeated manner, and in that a signal is produced if the difference between two actual speed values (12) determined one after the other is greater than a predetermined limit value and the desired position value (3) is not reached, or in that a signal is produced if the actual speed value (12) determined last is smaller than a predetermined limit value and the desired position value (3) is not reached.

11. Method of determining the presence or the dimensions or the correct position of a workpiece (25) on a numerically controlled machine tool having a main clamping device (15), relative to which a component (18, 19) is displaceably arranged, a desired position value (3) being delivered for the displacement of the component (18, 19) and the actual position value (11) of the component (18, 19) being determined in a continuously repeated manner, characterized in that, in the case of a counter-clamping device (24) provided on the displaceable component (18, 19) and holding the workpiece (25), a stop (26) fixed to the machine is provided for the workpiece (25), in that the desired position value (3) for the displaceable component (18, 19) is selected in such a way that the stop (26) fixed to the machine, if the workpiece is not present in the clamping device (24), would be at a location which lies inside the workpiece (25) if the latter is present, in that the actual torque value (9) for the drive of the displaceable component (18, 19) is determined in a continuously repeated manner, and in that a signal is produced if the difference between two actual torque values (9) determined one after the other is greater than a predetermined limit value and the desired position value (3) is not reached, or in that a signal is produced if the actual torque value (9) determined last is greater than a predetermined limit value and the desired position value (3) is not reached.

12. Method according to Claim 9 and/or Claim 10 and/or Claim 11, characterized in that the stop (26) fixed to the machine is arranged in the main clamping device (15) so that the workpiece (25) can be moved against it when the main clamping device (15) is opened.

13. Method according to one or more of Claims 9 to 12, characterized in that, from the last actual position value (11), determined before the occurrence of the signal, of the displaceable component (18, 19) and from the known dimensions of the displaceable component (18, 19) as well as its clamping device (24), a dimension of the workpiece (25) is calculated and/or the correct position and/or the presence of a workpiece (25) is recognized.

14. Method according to one or more of Claims 9 to 13, characterized in that, when the signal occurs, a desired position value (3) for the displaceable component (18, 19) is delivered which lies by a predetermined magnitude in the traverse direction of the displaceable component (18, 19) in front of the actual position value (11) determined during signal output.

15. Method according to one or more of Claims 9 to 14, characterized in that a desired torque value (6) is predetermined for the drive of the displaceable component (18, 19), and in that the desired torque value (6) is set to a limit value during signal output.

16. Method according to one or more of Claims 9 to 15, characterized in that a desired torque value (6) is predetermined for the drive of the displaceable component (18, 19), and in that the actual torque value (9) is determined in a continuously repeated manner and regulated in such a way that it does not exceed the desired torque value (6) even after contact between the workpiece (25) and the stop (26) fixed to the machine.

## Revendications

1. Procédé permettant de contrôler la présence, les dimensions ou la position correcte d'une pièce à usiner (16, 28) qui est serrée dans le dispositif de serrage principal (15) d'une machine-outil à commande numérique en regard duquel une partie structurelle (19) est disposée d'une manière mobile, procédé selon lequel une valeur de consigne de position (3) est fixée au préalable pour un déplacement de la partie structurelle (19) en direction de la pièce (16, 28) et la valeur réelle de position (11) de la partie structurelle (19) est relevée d'une manière répétée et de façon continue,
caractérisé en ce que la valeur de consigne de position (3) prévue pour la partie structurelle (19) mobile est choisie d'une façon telle qu'en l'absence d'une pièce (16, 28), une butée (17, 27), qui est prévue pour la pièce (16, 28) et qui fait partie de la partie structurelle (19) mobile, serait déplacée en un emplacement qui, la pièce (16, 28) étant présente, serait situé à l'intérieur de cette pièce, et en ce qu'un signal est produit lorsque la différence entre deux valeurs réelles de position (11) successivement relevées franchit vers le bas une valeur limite préfixée et lorsque la valeur de consigne de position (3) n'est pas atteinte.

2. Procédé permettant de contrôler la présence, les dimensions ou la position correcte d'une pièce à usiner (16, 28) qui est serrée dans le dispositif de serrage principal (15) d'une machine-outil à commande numérique en regard duquel une partie structurelle (19) est disposée d'une manière mobile, procédé selon lequel une valeur de consigne de position (3) est fixée au préalable pour un déplacement de la partie structurelle (19) en direction de la pièce (16, 28) et la valeur réelle de position (11) de la partie structurelle (19) est relevée d'une manière répétée et de façon continue,
caractérisé en ce que la valeur de consigne de position (3) prévue pour la partie structurelle (19) mobile est choisie d'une façon telle qu'en l'absence d'une pièce (16, 28), une butée (17, 27), qui est prévue pour la pièce (16, 28) et qui fait partie de la partie structurelle (19) mobile, serait déplacée en un emplacement qui, la pièce (16, 28) étant présente, serait situé à l'intérieur de cette pièce, en ce que la valeur réelle de vitesse (12) de la partie structurelle (19) mobile est relevée d'une manière répétée et de façon continue,et en ce qu'un signal est produit lorsque la différence entre deux valeurs réelles de vitesse (11a) successivement relevées est supérieure à une valeur limite préfixée et lorsque la valeur de consigne de position (3) n'est pas atteinte, ou en ce qu'un signal est produit lorsque la valeur réelle de vitesse (12) relevée en dernier est inférieure à une valeur limite préfixée et lorsque la valeur de consigne de position (3) n'est pas atteinte.

3. Procédé permettant de contrôler la présence, les dimensions ou la position correcte d'une pièce à usiner (16, 28) qui est serrée dans le dispositif de serrage principal (15) d'une machine-outil à commande numérique en regard duquel une partie structurelle (19) est disposée d'une manière mobile, procédé selon lequel une valeur de consigne de position (3) est fixée au préalable pour un déplacement de la partie structurelle (19) en direction de la pièce et la valeur réelle de position (11) de la partie structurelle (19) est relevée d'une manière répétée et de façon continue,
caractérisé en ce que la valeur de consigne de position (3) prévue pour la partie structurelle (19) mobile est choisie d'une façon telle qu'en l'absence d'une pièce (16, 28), une butée (17, 27), qui est prévue pour la pièce (16, 28) et qui fait partie de la partie structurelle (19) mobile, serait déplacée en un emplacement qui, la pièce (16, 28) étant présente, serait situé à l'intérieur de cette pièce, en ce que la valeur réelle de couple (9) de l'entraînement de la partie structurelle (19) mobile est relevée d'une manière répétée et de façon continue, et en ce qu'un signal est produit lorsque la différence entre deux valeurs réelles de couple (9) successivement relevées est supérieure à une valeur limite prédéterminée et lorsque la valeur de consigne de position (3) n'est pas atteinte, ou en ce qu'un signal est produit lorsque la valeur réelle de couple (9) relevée en dernier est supérieure à une valeur limite préfixée et lorsque la valeur de consigne de position (3) n'est pas atteinte.

4. Procédé selon la revendication 1 et/ou la revendication 2 et/ou la revendication 3,
caractérisé en ce que, lorsqu'un dispositif de contre-serrage (24) est prévu sur la partie structurelle mobile, la butée (27) prévue pour la pièce (28) est disposée dans ce dispositif de contre-serrage, d'une façon telle que, lorsque le dispositif de contre-serrage (24) est ouvert, cette butée peut être déplacée en appui contre la pièce (28) maintenue prête à être reçue.

5. Procédé selon une ou plusieurs des revendications précédentes,
caractérisé en ce qu'à partir de la dernière valeur réelle de position (11) de la partie structurelle (19) mobile relevée avant l'apparition du signal et à partir des dimensions connues de la butée (17, 27) prévue pour la pièce (16, 28), ainsi que des dimensions connues de la pièce structurelle (19) mobile, il est calculé une dimension de la pièce (16, 28) et/ou il est constaté la position correcte et/ou la présence d'une pièce (16, 28).

6. Procédé selon une ou plusieurs des revendications précédentes,
caractérisé en ce que, lors de l'appartition du signal, il est fourni, pour la partie structurelle (19) mobile, une valeur de consigne de position (3) qui est située en avant de la valeur réelle de position relevée lors de la production du signal, d'un écart préfixé suivant la direction de déplacement de la partie structurelle (19) mobile.

7. Procédé selon une ou plusieurs des revendications précédentes,
caractérisé en ce qu'une valeur de consigne de couple (6) est préfixée pour l'entraînement de la partie structurelle (19) mobile et en ce que la valeur de consigne de couple (6) est fixée à une valeur limite lors de la production du signal.

8. Procédé selon une ou plusieurs des revendications précédentes,
caractérisé en ce qu'une valeur de consigne de couple (6) est préfixée pour l'entraînement de la partie structurelle (19) mobile et en ce que la valeur réelle de couple (9) est relevée d'une manière répétée et de façon continue et fait l'objet d'un régulation telle qu'elle ne franchit pas vers le haut la valeur de consigne de couple (6) même après la venue en contact entre la pièce (16, 28) et la butée (17, 27).

9. Procédé permettant de contrôler la présence, les dimensions ou la position correcte d'une pièce à usiner (25) sur une machine-outil à commande numérique comportant un dispositif de serrage principal (15) en regard duquel une partie structurelle (19) est disposée d'une manière mobile, procédé selon lequel une valeur de consigne de position (3) est fournie pour le déplacement de la partie structurelle (19) et la valeur réelle de position (11) de la partie structurelle (19) est relevée d'une manière répétée et de façon continue,
caractérisé en ce que, lorsqu'il est prévu sur la partie structurelle (18, 19) mobile un dispositif de contre-serrage (24) qui maintient la pièce (25), il est prévu, sur la ligne de mesure d'outil, une butée (26) fixe vis-à-vis de la machine et servant pour la pièce (25), en ce que la valeur de consigne de position (3) prévue pour la partie structurelle (19) mobile est choisie d'une façon telle qu'en l'absence d'une pièce (25) dans le dispositif de serrage (24), la butée (26) fixe vis-à-vis de la machine serait déplacée en un emplacement qui, la pièce (25) étant présente, serait situé à l'intérieur de cette pièce,et en ce qu'un signal est produit lorsque la différence entre deux valeurs réelles de position (11) successivement relevées franchit vers le bas une valeur limite préfixée et lorsque la valeur de consigne de position (3) n'est pas atteinte.

10. Procédé permettant de contrôler la présence, les dimensions ou la position correcte d'une pièce à usiner (25) sur une machine-outil à commande numérique comprenant un dispositif de serrage principal (15) en regard duquel une partie structurelle (18, 19) est disposée d'une manière mobile, procédé selon lequel une valeur de consigne de position (3) est fournie pour le déplacement de la partie structurelle (18, 19) et la valeur réelle de position (12) de la partie structurelle (18, 19) est relevée d'une manière répétée et de façon continue,
caractérisé en ce que, lorsqu'un dispositif de contre-serrage (24) servant à maintenir la pièce (25) est prévu sur la partie structurelle (18, 19) mobile, il est prévu pour la pièce (25) une butée (26) fixe vis-à-vis de la machine, en ce que la valeur de consigne de position (3) prévue pour la partie structurelle mobile (18, 19) est choisie d'une façon telle qu'en l'absence d'une pièce (25) dans le dispositif de serrage (24), la butée (26) fixe vis-à-vis de la machine serait déplacée en un emplacement qui, la pièce (25) étant présente, serait situé à l'intérieur de cette pièce, en ce que la valeur réelle de vitesse (12) de la partie structurelle (18, 19) mobile est relevée d'une manière répétée et de façon continue,et en ce qu'un signal est produit lorsque la différence entre deux valeurs réelles de vitesse (12) successivement relevées est supérieure à une valeur limite préfixée et lorsque la valeur de consigne de position (3) n'est pas atteinte, ou en ce qu'un signal est produit lorsque la valeur réelle de vitesse (12) relevée en dernier est inférieure à une valeur limite préfixée et lorsque la valeur de consigne de position (3) n'est pas atteinte.

11. Procédé permettant de contrôler la présence, les dimensions ou la position correcte d'une pièce à usiner (25) sur une machine-outil à commande numérique comprenant un dispositif de serrage principal (15) en regard duquel une partie structurelle (18, 19) est disposée d'une manière mobile, procédé selon lequel une valeur de consigne de position (3) est fournie pour le déplacement de la partie structurelle (18,19) et la valeur réelle de position (12) de la partie structurelle (18, 19) est relevée d'une manière répétée et de façon continue,
caractérisé en ce que, lorsqu'un dispositif de contre-serrage (24) servant à maintenir la pièce (25) est prévu sur la partie structurelle (18, 19) mobile, il est prévu pour la pièce (25) une butée (26) fixe vis-à-vis de la machine, en ce que la valeur de consigne de position (3) prévue pour la partie structurelle mobile (18, 19) est choisie d'une façon telle qu'en l'absence d'une pièce dans le dispositif de serrage (24), la butée (26) fixe vis-à-vis de la machine serait déplacée en un emplacement qui, la pièce (25) étant présente, serait situé à l'intérieur de cette pièce, en ce que la valeur réelle de couple (9) prévue pour l'entraînement de la partie structurelle (18, 19) mobile est relevée d'une manière répétée et de façon continue, et en ce qu'un signal est produit lorsque la différence entre deux valeurs réelles de couple (9) successivement relevées est supérieure à une valeur limite préfixée et lorsque la valeur de consigne de position (3) n'est pas atteinte, ou en ce qu'un signal est produit lorsque la valeur réelle de couple (9) relevée en dernier est supérieure à une valeur limite préfixée et lorsque la valeur de consigne de position (3) n'est pas atteinte.

12. Procédé selon la revendication 9 et/ou la revendication 10 et/ou la revendication 11,
caractérisé en ce que la butée (26) fixe vis-à-vis de la machine est disposée dans le dispositif de serrage principal (15), de sorte que, lorsque le ce dispositif de serrage principal (15) est ouvert, la pièce (25) peut être déplacée en appui contre la butée.

13. Procédé selon une ou plusieurs des revendications 9 à 12,
caractérisé en ce qu'à partir de la dernière valeur réelle de position (11) de la partie structurelle (18, 19) mobile relevée avant l'apparition du signal et à partir des dimensions connues de la pièce structurelle (18, 19) mobile et du dispositif de serrage (24) de cette pièce, il est calculé une dimension de la pièce (25) et/ou il est constaté la position correcte et/ou la présence d'une pièce (25).

14. Procédé selon une ou plusieurs des revendications 9 à 13,
caractérisé en ce que, lors de l'apparition du signal, il est fourni, pour la partie structurelle (18, 19) mobile, une valeur de consigne de position (3) qui est située en avant de la valeur réelle de position relevée lors de la production du signal, d'un écart préfixé suivant la direction de déplacement de la partie structurelle (18, 19) mobile.

15. Procédé selon une ou plusieurs des revendications 9 à 14,
caractérisé en ce qu'une valeur de consigne de couple (9) est préfixée pour l'entraînement de la partie structurelle (18, 19) mobile et en ce que la valeur de consigne de couple (9) est fixée à une valeur limite lors de la production du signal.

16. Procédé selon une ou plusieurs des revendications 9 à 15,
caractérisé en ce qu'une valeur de consigne de couple (6) est préfixée pour l'entraînement de la partie structurelle (18, 19) mobile et en ce que la valeur réelle de couple (9) est relevée d'une manière répétée et de façon continue et fait l'objet d'un régulation telle qu'elle ne franchit pas vers le haut la valeur de consigne de couple (6) même après la venue en contact entre la pièce (25) et la butée (26) fixe vis-à-vis de la machine.
